# EUROPÄISCHE PATENTSCHRIFT

(11) **EP 4 051 566 B1**
(45) Veröffentlichungstag und Bekanntmachung des Hinweises auf die Patenterteilung: **12.06.2024**
(21) Anmeldenummer: 20811532.9
(22) Anmeldetag: 02.11.2020
(51) Int. Cl.: B63B 1/24, B60L 50/90, B63B 32/10, B63B 32/60, B63H 1/16, B63H 11/08

(54) **UNTERWASSERMOTORMODUL FÜR EIN WASSERSPORTGERÄT**
UNDERWATER MOTOR MODULE FOR A WATER SPORTS DEVICE
MODULE DE MOTEUR SOUS-MARIN POUR UN ÉQUIPEMENT DE SPORTS NAUTIQUES

(30) Priorität: 01.11.2019 DE 102019129576
(43) Veröffentlichungstag der Anmeldung: 07.09.2022
(73) Patentinhaber: ROSEN 2 Holding AG, 6370 Stans (CH)
(72) Erfinder: ROSEN, Hermann, 6047 Kastanienbaum (Horw LO) (CH)
(74) Vertreter: Wischmeyer, André
(86) Internationale Anmeldenummer: PCT/EP2020/080700
(87) Internationale Veröffentlichungsnummer: WO 2021/084130

(56) Entgegenhaltungen:
- WO-A1-2019/151242
- CN-A- 107 161 279
- CN-A- 108 945 334
- DE-A1-102018 113 137
- DE-U1-202017 103 703
- FR-A1- 3 029 499
- US-A- 5 722 864
- US-B1- 10 308 336

## Beschreibung

Die Erfindung betrifft ein Unterwassermotormodul für ein Wassersportgerät. Unterwassermotormodule dienen zur Erzeugung eines Vortriebes innerhalb von Wasser und können mit Wassersportgeräten ge- und davon entkoppelt werden.

Aus der DE 20 2017 103 703 U1 und der WO 2013 165 445 sind Wassersportgeräte bekannt, deren Antriebsmodul ausgetauscht werden kann.

Die US 5 722 864 A, die CN 10 716 129 A und die FR 3 029 499 A1 zeigt Antriebseinheiten für Wasserfahrzeuge mit einem narbenlosen Impeller, wobei die Antriebseinheiten jeweils mittels eines Innenläufers eines Elektromotors ausgebildet werden.

Die CN 1 089 445 334 A und die DE 2 02 017 103 703 U1 offenbaren Unterwasserantriebseinheiten für Wassersportgeräte.

Aufgabe der vorliegenden Erfindung ist die Bereitstellung eines Unterwassermotormoduls sowie eines Unterwasserantriebes und eines Wassersportgerätes jeweils mit einem Unterwassermodul, die bei hoher Zuverlässigkeit vielfältiger einsetzbar ist.

Erfindungsgemäß wird die Aufgabe durch ein Unterwassermotormodul nach Anspruch 1 gelöst.

Ein Unterwassermotormodul bildet wenigstens einen Strömungskanal mit zumindest einer Einlassöffnung und zumindest einer Auslassöffnung aus. Das Unterwassermotormodul weist einen als Innenläufer ausgebildeten Motor auf. Der Motor umfasst einen hohlen Rotor, welcher auf bzw. mit seiner Innenseite den Strömungskanal mitausbildet und auf seiner Innenseite Schaufeln trägt. Gelagert ist der Rotor außerhalb des Strömungskanals auf zumindest einer vom Strömungskanal weggerichteten Außenseite. Außerdem umfasst der Motor einen äußeren, in einem Gehäuse angeordneten Stator.

Erfindungsgemäß weist das Unterwassermotormodul einen Modulabschnitt auf, der in Strömungsrichtung hinter dem Rotor zumindest eine Leitschaufel aufweist und den Strömungskanal mitausbildet. Insbesondere hat die Innenseite des Modulabschnittes abgesehen von der Leitschaufel den gleichen Radius wie die Rotor-Innenseite. Dadurch bilden Rotor und Modulabschnitt bevorzugt einen Strömungskanal mit gleichbleibendem Querschnitt aus. Die Leitschaufel dient zur Leitung des vom Rotor verdrängten Wassers, insbesondere zu einer Reduzierung eines durch den Rotor in den Wasserstrom eingebrachten Dralls. Erfindungsgemäß ist in dem Modulabschnitt eine insbesondere einen Motor-Controller aufweisende Motorelektronik angeordnet. Diese ist um denselben Teil der Rotationsachse wie die Leitschaufel und außerhalb des Strömungskanals angeordnet. Dadurch baut das Unterwassermotormodul noch kompakter und sind die notwendigen Längen elektrischer Leiter durch die benachbarte Anordnung von Motorelektronik und Stator weitestmöglich reduziert. Durch den reduzierten Drall wird bei dem Einsatz des Unterwassermotormoduls ein vereinfachtes Handling des angetriebenen Wassersportgerätes ermöglicht. Die Strömungsrichtung ist insbesondere zumindest teilweise parallel zur Rotationsachse des Rotors gerichtet und/oder der Fortbewegungsrichtung des Unterwassermotormoduls insbesondere entgegengerichtet. Die Leitschaufeln sind insbesondere als Richtschaufeln ausgebildet.

Das Unterwassermotormodul ist insbesondere eine Antriebseinheit, welche in Verbindung mit unterschiedlichen Wassersportgeräten genutzt werden kann. Das Unterwassermotormodul ist insbesondere autark funktionsfähig und benötigt bevorzugt keine Bereitstellung von Energie durch ein im Betrieb damit verbundenes Wassersportgerät bzw. andere Teile eines das Unterwassermotormodul aufweisenden Wassersportgerätes. Das Unterwassermotormodul ist vorzugsweise über einen Kopplungsmechanismus mit Wassersportgeräten zu koppeln und zerstörungsfrei davon zu entkoppeln.

Der Strömungskanal ist ein sich insbesondere in einer Vortriebsrichtung des Unterwassermotormoduls erstreckender Hohlraum, innerhalb dessen im Betrieb Wasser durch die Schaufeln verdrängt wird. Der Strömungskanal hat insbesondere genau eine Auslassöffnung, deren Längsmittelachse mit der Rotationsachse des Rotors zumindest in einem Betriebsfall des Unterwassermotormoduls zusammenfällt. Der Strömungskanal hat insbesondere genau eine oder eine Mehrzahl von Einlassöffnungen, durch welche im Betrieb Wasser in den Strömungskanal eintritt. Die Einlassöffnungen) hat/haben insbesondere eine Längsmittelachse, die mit der Rotationsachse zusammenfällt. Alternativ ist/sind die Einlassöffnung(en) bevorzugt relativ zur Rotationsachse des Rotors bzw. zur Längsmittelachse des mittleren Abschnittes des Strömungskanals in radialer Richtung versetzt, d.h. dezentral angeordnet.

Der Rotor als im Betrieb rotierender und zur Leistungsabgabe ausgebildeter Bestandteil des Motors ist innerhalb des im Betrieb nicht rotierenden Stators des Motors angeordnet. Insbesondere ist der Rotor, ausgehend von seiner Rotationsachse, in radialer Richtung zumindest teilweise, insbesondere vollständig von dem Stator umgeben. Der Stator ist dabei ortsfest zum äußeren Gehäuse des Unterwassermotormoduls angeordnet.

Der Rotor hat, ungeachtet der Schaufeln, insbesondere zumindest einen quer zur Rotationsachse gemessenen runden Innenquerschnitt, der vorzugsweise mit den weiteren, in Richtung der Rotationsachse versetzten Innenquerschnitten des Rotors übereinstimmt. Insbesondere weist der Rotor eine Innenseite auf, welche in axialer Richtung zumindest stufenlos in im Betrieb relativ zum Stator ortsfeste Wandungselemente des Strömungskanals übergeht, die insbesondere abschnittsweise einen konstanten und mit dem des Rotors übereinstimmenden Innendurchmesser haben.

Der Rotor ist bevorzugt drehbeweglich, insbesondere am Stator oder am Gehäuse gelagert. Dazu liegt insbesondere zumindest ein Drehlager oder ein Lagerinnenring an einer Außenseite- bzw. -oberfläche des Rotors an, wobei die Innenseite des Rotors zumindest teilweise zwischen der Außenoberfläche und der Rotationsachse angeordnet ist. Bevorzugt ist der Rotor durch zwei Drehlager gelagert, die bevorzugt mit einander zugewandten Stirnflächen an Absätzen des Rotors oder eines damit verbundenen Lagerrings anliegen. Das zumindest eine Drehlager hat somit vorzugsweise einen größeren Innendurchmesser als der Strömungskanal bzw. der Rotor ungeachtet der Schaufeln im gleichen Querschnitt.

Der Rotor trägt insbesondere eine Mehrzahl von in Richtung der Rotationsachse in den Strömungskanal ragenden Schaufeln. Diese sind bei Rotation des Rotors zu einer Verdrängung innerhalb des Rotors befindlichen Wassers in Richtung der zumindest einen Auslassöffnung vorgesehen. Die Rotationsachse schneidet insbesondere keine der Schaufeln, wodurch der Rotor einen zentralen, für den Durchtritt von Wasser in axialer Richtung freien Bereich aufweist. Insbesondere bildet der Rotor mit den Schaufeln einen naben- und wellenlosen Impeller aus, dessen Schaufeln nur am radial äußeren Bereich gelagert sind und deren radial innere Enden frei im Strömungskanal angeordnet sind. Durch die vorbeschriebene Ausbildung insbesondere des Rotors lässt sich ein besonders fehlerunanfälliges Unterwassermotormodul bereitstellen, dessen Funktion etwa gegenüber Propeller-Antrieben durch regelmäßig im Wasser vorkommende Fremdkörper deutlich weniger eingeschränkt wird. Außerdem baut das erfindungsgemäße Unterwassermotormodul besonders kompakt und ist somit für unterschiedlichste Anwendungsgebiete und Wassersportgeräte anwendbar.

Vorzugsweise weist der Rotor in Umfangsrichtung nebeneinander angeordnete Permanentmagnete auf. Diese sind insbesondere gleichförmig und gleichmäßig voneinander sowie von der Rotationsachse beabstandet angeordnet. Die Permanentmagnete sind außerdem bevorzugt auf einer Außenseite des Rotors und damit außerhalb des Strömungskanals angeordnet. Bevorzugt werden die Permanentmagnete durch bzw. über einen Lagerring auf dem Rotor gehalten. Der Lagerring ist bevorzugt in Richtung der Rotationsachse auf den Rotor aufsteckbar bzw. im Betrieb aufgesteckt, wodurch sich die Permanentmagnete in axialer Richtung zwischen dem Lagerring und zumindest einem Absatz des Rotors positioniert befinden. Die Permanentmagneten haben insbesondere zylindermantelabschnittsförmige Innen- und Außenflächen, durch die sich die Permanentmagneten besonders platzsparend in das Unterwassermotormodul einfügen und einen hohen Wirkungsgrad des Motors ermöglichen.

Der Rotor ist insbesondere über zwei in Richtung der Rotationsachse voneinander beabstandete Lager gelagert. Die Lager sind insbesondere Kugellager, bevorzugt Schrägkugellager. Vorzugsweise handelt es sich um Keramik-Kugellager. Alternativ oder ergänzend ist zumindest eines der Lager als hydrodynamisches Gleitlager ausgebildet. Zumindest eines der beiden Lager oder dessen Außenring liegt in radialer und/oder in axialer Richtung am Gehäuse und/oder am Stator an. Durch diese Lagerungen wird ein bestmöglicher Kompromiss zwischen Leichtlauf und Bauraum der Lagerung geschaffen.

Der Stator weist bevorzugt eine Mehrzahl von in Umfangsrichtung nebeneinander angeordneten Spulen auf, welche in radialer Richtung von den Permanentmagneten beabstandet sind. Die Spulen sind vorzugsweise um eine senkrecht zur Rotationsachse des Rotors angeordnete Wickelachse gewickelt. Die axiale Erstreckung der Spulen entspricht bevorzugt im Wesentlichen der axialen Erstreckung der Permanentmagneten. Durch die Kombination von Spulen und Permanentmagneten in der vorbeschriebenen Geometrie und mit der vorbeschriebenen Lagerung ist ein besonders leistungsfähiger Elektromotor ermöglicht, welcher zugunsten vielfältiger Anwendungen des Unterwassermotormoduls relativ zum Strömungskanal besonders klein baut.

In einer vorteilhaften Ausgestaltung der Erfindung weist die Motorelektronik eine Mehrzahl von in Umfangsrichtung nebeneinander angeordneten, länglichen und vorzugsweise zylinderförmigen Kondensatoren auf. Deren Längsachsen verlaufen insbesondere parallel zu einer Zentralachse des Unterwassermotormoduls, die insbesondere mit der Rotationsachse des Rotors zusammenfällt. Durch diese Ausbildung der Kondensatoren der Motorelektronik wird auch im Bereich der Leitschaufeln eine besonders schlanke Gehäuseform erreicht. Die Motorelektronik weist insbesondere zumindest eine ring- oder ringsegmentförmige Platine auf, deren flächige Erstreckung in einer Ebene quer zur Rotationsachse verläuft. Bevorzugt handelt es sich dabei um eine doppel- oder mehrstöckige Platine. Durch diese angepasste Platinenform lassen sich die Kondensatoren optimal anbinden und das Gehäuse weiter verschlanken. Zur Verhinderung eines Eindringens von Wasser in die Motorelektronik ist diese vorzugsweise innerhalb eines zugehörigen Abschnittes des Gehäuses vergossen.

Vorzugsweise sind die Motorelektronik und der Stator in einem gemeinsamen Gehäuse angeordnet, welches vorzugsweise dreiteilig ist. Das Gehäuse hat bevorzugt eine zylindrische Grundform und äußerlich bevorzugt Kühlrippen. Durch die Mehrteiligkeit des Gehäuses sind Einzelteile unkritisch austauschbar. Darüber hinaus weist das Gehäuse bevorzugt wenigstens einen Bereich zur Befestigung weiterer Elemente eines auszubildenden Wassersportgeräts auf. Diese Elemente beziehen sich einerseits auf die mechanische Befestigung des Unterwassermotormoduls und sind zum Beispiel in Form von Befestigungsmitteln wie Flanschen, Schnapphaken und dergleichen insbesondere lösbare Befestigungsmitteln ausgebildet. Andererseits handelt es sich um wenigstens eine elektrische oder elektronische Schnittstelle für die Energie- und Signalübertragung.

Vorteilhafterweise ist der Stator mit zumindest einem Teil des Gehäuses vergossen. Insbesondere ist der Stator in einem anderen Teil des Gehäuses vergossen als die Motorelektronik. Dadurch wird auch im Bereich zwischen dem Rotor und dem Gehäuse ein Eindringen von Wasser zuverlässig verhindert und werden die vorgenannten Vorteile trotzdem verwirklicht. Die Vergussmasse ist dazu in axialer Richtung insbesondere zumindest zwischen den beiden Lagern angeordnet.

In einer vorteilhaften Ausgestaltung der Erfindung weist das Gehäuse in Fahrtrichtung vorne, d.h. in Strömungsrichtung hinten, einen sich insbesondere von dem Rotor her aufweitenden Außenabschnitt auf. Dieser Außenabschnitt hat insbesondere einen größeren Radius als die in axialer Richtung benachbarten Abschnitte des Unterwassermotormoduls. Durch den Außenabschnitt und einen in radialer Richtung zwischen dem Außenabschnitt und der Rotationsachse liegenden Innenabschnitt des Unterwassermotormoduls ist insbesondere die oder eine der Einlassöffnungen angeordnet. Die zumindest eine Einlassöffnung ist insbesondere ring- oder ringsegmentförmig. Bevorzugt hat das Unterwassermotormodul Einlassöffnungen auf sich gegenüberliegenden Seiten des Unterwassermotormoduls. Durch diese Ausbildung der Einlassöffnung(en) fließt das dem Rotor zuströmende Wasser zumindest abschnittsweise und zumindest anteilig in radialer Richtung und hat der Strömungskanal einen verzweigten Einlasskanal oder einen Einlasskanal mit ringförmigem Querschnitt. Durch diese Ausbildung der Einlassöffnung ist es möglich, weitere Bauteile des Wassersportgerätes in Fahrtrichtung vor dem Unterwassermotormodul und koaxial anzuordnen, ohne dass dadurch der Zustrom an Wasser zum Rotor behindert wird. Das erlaubt den Einsatz des Unterwassermotormoduls insbesondere bei Wassersportgeräten unterschiedlicher Längen und Ausstattungen.

Vorzugsweise weist das Unterwassermotormodul einen vorderen Anschlussbereich für ein Energiespeichermodul und/oder eine Steuereinheit auf. Der Anschlussbereich dient insbesondere zur lösbaren Kopplung dieser. Der Anschlussbereich ist insbesondere zumindest im Wesentlichen zwischen Einlassöffnung und Rotorachse ausgebildet. Durch diesen Anschlussbereich lassen sich insbesondere zumindest im Wesentlichen zylinderförmige Komponenten an das Unterwassermotormodul anschließen, wiederum ohne den Wasserzufluss zum Rotor zu gefährden.

Die Aufgabe wird weiterhin gelöst durch einen Unterwasserantrieb umfassend ein vorbeschriebenes Unterwassermotormodul sowie ein Energiespeichermodul. Das Energiespeichermodul ist insbesondere am Anschlussbereich des Unterwassermotormoduls angeordnet und stellt Energie für die Rotation des Rotors bereit.

Das Energiespeichermodul weist bevorzugt eine Mehrzahl von Batteriepaketen auf, die in Längsrichtung hintereinander in einem Energiespeichermodulgehäuse angeordnet sind. Das Energiespeichermodulgehäuse ist dabei insbesondere der Teil des Energiespeichermoduls, welcher unmittelbar mit dem Unterwassermotormodul zu koppeln ist. Insbesondere hat das Energiespeichermodul zumindest vier und höchstens zehn Batteriepakete jeweils vorzugsweise mit einer Vielzahl von Batteriezellen. Bevorzugt weist das Energiespeichermodul außerdem eine Batteriesteuerelektronik auf, welche zwischen den Batteriepaketen und dem koppelbaren Abschnitt des Energiespeichermodulgehäuses positioniert ist. Dadurch ist dieser besonders geschützt. Das Energiespeichermodul weist vorzugsweise Doppelblöcke auf, bei denen zwei äußere Gehäuseteile sowie zumindest ein Gehäusemittelteil gegeneinander verschraubt werden und so einen Rahmen für eine Gruppe von Batteriezellen bilden. Sowohl die äußeren Gehäuseteile wie auch der Gehäusemittelteil eines solchen Doppelblocks weisen insbesondere Führungs- bzw. Befestigungsstege auf, die im montierten Zustand und zum Teil zwischen den Batteriezellen angeordnet sind und zum Teil Aufnahme für die Befestigungsmittel aufweisen. Das Energiespeichermodulgehäuse hat vorzugsweise einen zumindest im Wesentlichen zylindrischen Querschnitt und eine in die axiale Richtung längliche Erstreckung, wodurch sie sich stromlinienförmig mit dem Unterwassermotormodul ergänzt.

Bevorzugt weist das Energiespeichermodul einen Handgriff auf. Dieser ist insbesondere an dem von dem Unterwassermotormodul abgewandten Ende angeordnet. Insbesondere umschließt der Handgriff eine durchgehende Ausnehmung. Durch den Handgriff ist der Unterwasserantrieb bzw. das Energiespeichermodul leichter händelbar und außerdem eine Verjüngung des frontalen Teils des Unterwasserantriebs erreicht, der zu geringeren Strömungswiderständen führt.

Die Aufgabe wird weiterhin gelöst durch einen Unterwasserantrieb mit einem vorbeschriebenen Unterwassermotormodul und einer Steuereinheit, die insbesondere am Anschlussbereich des Unterwassermotormoduls angeordnet ist. Die Steuereinheit ist bevorzugt zur Erzeugung von Steuersignalen für den Motor ausgebildet. Insbesondere hängt im Betrieb die Leistung bzw. Drehzahl des Motors von den Steuersignalen ab. Durch diesen Aufbau ist der Unterwasserantrieb stromlinienförmig ausgebildet und erlaubt insbesondere die Anwendung unterschiedlicher Steuereinheit für unterschiedliche Benutzer.

In einer weiteren erfindungsgemäßen Weiterbildung zeichnet sich das Unterwassermotormodul dadurch aus, dass der Steuereinheit ein Headset umfassend zumindest einen Kopfsensor zur Aufnahme von Bewegungen zumindest eines Teils des Kopfes einer im Betrieb das Unterwassermotormodul bedienenden Person zugeordnet ist. Hierdurch können die Arme und Beide frei bewegt werden, ohne etwaige Steuerungsmittel in der Hand zu halten. Beispielsweise kann durch gezielte und vorab festlegbare oder festgelegte Bewegungsabläufe, die von der Steuereinheit vorgegeben oder von dieser erlernt werden können, beispielsweise mehrmaliges Nicken oder Schütteln des gesamten Kopfes die Vortriebsgeschwindigkeit erhöht oder verringert werden. Zur Erkennung dieser Bewegung weist das Headset z.B. einen Beschleunigungssensor als Kopfsensor auf.

Vorzugsweise weist einer der erfindungsgemäßen, vorbeschriebenen Unterwasserantriebe zusätzlich zum Strömungskanal einen Strömungskühlkanal auf, der durch das Energiespeichermodul führt und bevorzugt in den Strömungskanal mündet. Durch den Strömungskühlkanal lässt sich im Betrieb entstehende Verlustwärme im Bereich des Energiespeichermoduls ableiten und die Bauteilbelastungen dadurch eingrenzen. Insbesondere verläuft der Strömungskühlkanal koaxial mit dem vom Rotor ausgebildeten Strömungskanalabschnitt und bevorzugt durch die Batteriepakete hindurch.

In einer vorteilhaften Ausgestaltung der Erfindung weist der Unterwasserantrieb wenigstens ein Steuerelement auf, das zur Beeinflussung der Ausrichtung eines im Betrieb entstehenden Wasserstroms ausgebildet ist. Das Steuerelement ist insbesondere durch wenigstens ein ausrichtbares Teil des Unterwassermotormoduls und/oder ein Düsenelement ausgebildet. Das Düsenelement bildet insbesondere die Auslassöffnung und hat einen sich in Strömungsrichtung verjüngenden Innenquerschnitt. Vorzugsweise ist das Düsenelement mittels eines Kugelgelenkes in unterschiedliche Richtungen schwenkbeweglich gelagert. Außerdem umfasst das Steuerelement bevorzugt ein mit dem ausrichtbaren Teil verbundenes und insbesondere elektrisch angesteuertes Stellglied oder Steuerelement. Durch das Steuerelement ist die Fortbewegungsrichtung des Unterwasserantriebs bzw. des damit gekoppelten Wassersportgerätes im Betrieb änderbar.

Vorzugsweise weist der Unterwasserantrieb einen Rotor mit um eine jeweilige Schaufelachse verdrehbare Schaufeln auf. Hierdurch können unterschiedliche Vorschübe bei gleicher Umdrehungsgeschwindigkeit erzielt werden.

Ein solcher der Rotor ist vorzugsweise mehrteilig mit einem Schaufelträger beispielsweise in Form eines Impellerrings und einem relativ zum Schaufelträger entlang einer Rotationsachse verschieblichen Verschiebering ausgebildet, wobei letzterer zur Verdrehung der Schaufeln mit jeweiligen Verschiebestiften auf jeweilige Schaufelaufnahmen einwirkt.

Die Aufgabe wird weiterhin gelöst durch ein Wassersportgerät mit dem vorbeschriebenen Unterwasserantrieb. Das Wassersportgerät weist bevorzugt einen Schwimmkörper auf, der insbesondere als Schwimmbrett ausgebildet ist, und eine Tragflächenvorrichtung. Die Tragflächenvorrichtung hat bevorzugt eine Mehrzahl von Tragflächen. Die Tragflächenvorrichtung ist insbesondere mittels einer Haltevorrichtung am Schwimmkörper befestigt. Die Haltevorrichtung weist vorzugsweise einen Lenker auf, an dem die Tragflächenvorrichtung angeordnet ist. Vorzugsweise hat die Tragflächenvorrichtung zumindest zwei Tragflächen. Insbesondere umfasst die Tragflächenvorrichtung eine Aufnahme, an der die zumindest eine Tragfläche ortsfest angeordnet ist und die unmittelbar mit der Haltevorrichtung gekoppelt ist. Die Tragflächenvorrichtung ist durch die Haltevorrichtung aus einer Ruhe- und/oder Startposition dicht am Schwimmkörper in eine Betriebsstellung unterhalb des Schwimmkörpers überführbar. Der Schwimmkörper ist in der Betriebsstellung und während einer Vorwärtsbewegung aufgrund eines durch die Tragflächenvorrichtung bewegten Auftriebs insbesondere in eine von einer Wasseroberfläche beabstandete Position überführbar. Das Unterwassermodul ist bevorzugt zumindest teilweise als Teil der Tragflächenvorrichtung ausgebildet.

Ein Verfahren zur Konstruktion und/oder Fertigung eines Wassersportgerätes, welches einen modularen Aufbau umfassend ein Schwimmkörpermodul besitzt und dessen Module über Schnittstellen miteinander verbindbar sind sowie im Betrieb miteinander verbunden sind, kann wie folgt aussehen. Das Wassersportgerät ist insbesondere ein Vorbeschriebenes. Gemäß dem Verfahren sind eine Servervorrichtung und eine programmgesteuerte Eingabeschnittstelle für benutzerdefinierte Eingaben auf einem insbesondere entfernt von der Servervorrichtung angeordneten, bevorzugt mobilen Endgerät vorgesehen. Die Module sind in einem Computerprogramm der Servervorrichtung und/oder des Endgerätes abgebildet. Wenigstens eine Außenkontur des Schwimmkörpermoduls des Wassersportgerätes ist benutzerdefiniert, zumindest innerhalb gewisser Grenzen, frei festlegbar oder aus einer Reihe von vorgegebenen Modulen auswählbar. Weiterhin können als Auswahlkriterien verschiedene Sensoren wie z.B. Gyrosensoren, Geschwindigkeitssensoren, Positionssensoren (GPS, Glonass, Beidou etc.), Abstandssensoren (Echolot, Sonar), Infrarotsensoren und Neigungssensoren ausgewählt werden. Weiterhin sind beispielsweise verschiedene Antriebe oder eine Mehrzahl davon, zugehörige Steuerungen und unterschiedliche Mensch-Maschine-Schnittstellen auswählbar. Bei einem als Hydrofoilboard oder Foilboard ausbildbaren Wassersportgerät sind weiterhin die Tragflächenvorrichtung mit insbesondere Form, Farbe und Anzahl der Tragflächen, die Haltevorrichtung und etwaige Steuereinheiten auswählbar. Diesen unterscheiden sich beispielsweise in der Anzahl der speicherbaren Fahrprofile und vorgebbarer Fahrmodi.

Auf Basis der Außenkontur werden Fertigungsinformationen automatisiert geschaffen. Das hiernach gefertigte Schwimmkörpermodul ist mit einem, insbesondere mehreren Modulen zur Fertigstellung des Wassersportgerätes verbindbar. Durch dieses Verfahren wird die Anwendbarkeit erfindungsgemäßer Wassersportgeräte insofern erweitert, als dass unterschiedliche Nutzer je nach körperlichen Gegebenheiten und Fähigkeiten ein für sie optimal geeignetes Wassersportgerät erhalten und benutzen können.

Bevorzugt wird auf der Servervorrichtung oder dem Endgerät automatisiert eine Prüfung hinsichtlich konstruktiver, insbesondere schwimmtechnischer Eigenschaften des Wassersportgerätes vorgenommen. Dadurch wird dem Anwender des Verfahrens unmittelbar angezeigt, inwiefern das konfigurierte Schwimmgerät für ihn geeignet ist.

Weitere Einzelheiten und Vorteile der Erfindung sind den nachfolgend beschriebenen, schematisch dargestellten Ausführungsbeispielen zu entnehmen; es zeigen:
- Fig. 1: eine Übersichtsdarstellung eines erfindungsgemäßen Unterwasserantriebes,
- Fig. 2: einen Längsschnitt des Unterwasserantriebes gemäß Fig. 1,
- Fig. 3: einen weiteren Längsschnitt des Unterwasserantriebes gemäß Fig. 1,
- Fig. 4: einen Längsschnitt eines Teils des Unterwassermotormoduls des Unterwasserantriebs gemäß Fig. 1,
- Fig. 5: eine Explosionsdarstellung eines ersten Teils des in Fig. 3 dargestellten Teils des Unterwassermotormoduls,
- Fig. 6: eine Explosionsdarstellung eines zweiten Teils des in Fig. 3 dargestellten Teils des Unterwassermotormoduls,
- Fig. 7: eine Explosionsdarstellung eines dritten Teils des in Fig. 3 dargestellten Teils des Unterwassermotormoduls,
- Fig. 8a bis 8c: Längsschnitte unterschiedlicher Energiespeichermodule eines erfindungsgemäßen Unterwasserantriebs,
- Fig. 9: eine Seitenansicht eines erfindungsgemäßen Wassersportgerätes,
- Fig. 10: eine teilweise Ansicht eines weiteren Ausführungsbeispiels in einem Längsschnitt,
- Fig. 11: eine teilweise Ansicht des Ausführungsbeispiels nach Fig. 10 in einem Querschnitt.
- Fig. 12: eine weitere, teilweise Ansicht des erfindungsgemäßen Gegenstands nach Fig. 11 in einem Längsschnitt.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen einer der Ansprüche 1 und 18. Sofern sinnvoll, sind funktional gleichwirkende Teile mit identischen Bezugsziffern versehen.

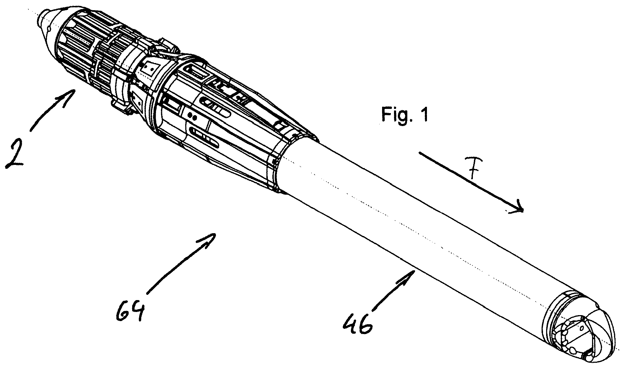

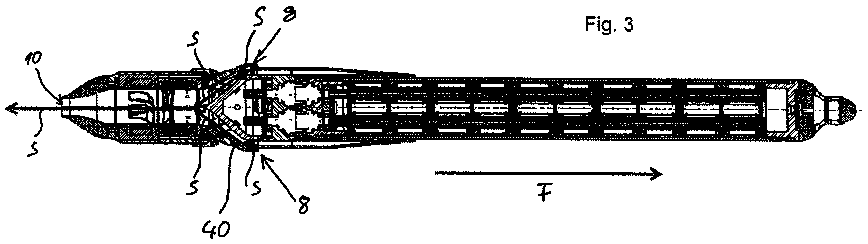

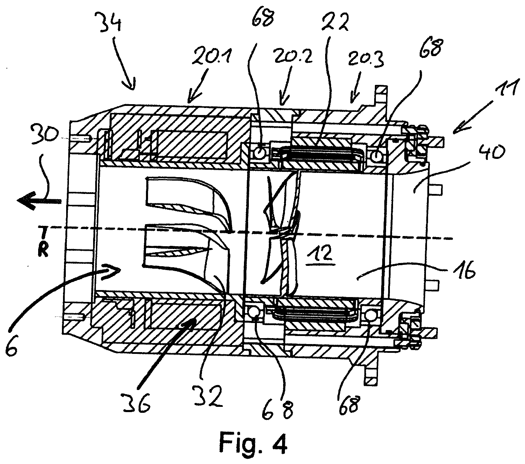

Die Fig. 1 bis 3 zeigen einen aus einem Unterwassermodul 2 und einem Energiespeichermodul 46 zusammengesetzten Unterwasserantrieb 64. Das Unterwassermotormodul 2 hat einen Strömungskanal 6 mit mehreren Einlassöffnungen 8 und einer Auslassöffnung 10 (vergl. Fig. 3). Das Unterwassermotormodul 2 weist einen als Innenläufer ausgebildeten Motor 11 auf, der einen hohlen, mit seiner Innenseite 12 den Strömungskanal 6 mitausbildenden Rotor 16 umfasst (vergl. Fig. 4). Der Rotor 16 trägt Schaufeln 18, die in den Strömungskanal 6 hineinragen. Im Betrieb rotiert der Rotor 16 um eine Rotationsachse R. Auf seiner vom Strömungskanal weggerichteten Außenseite 14 ist der Rotor 16 außerhalb des Strömungskanals 6 durch zwei Lager 68 gelagert. Außerdem umfasst das Unterwassermotormodul 2 einen äußeren, in einem Gehäuse 20 angeordneten Stator 22.

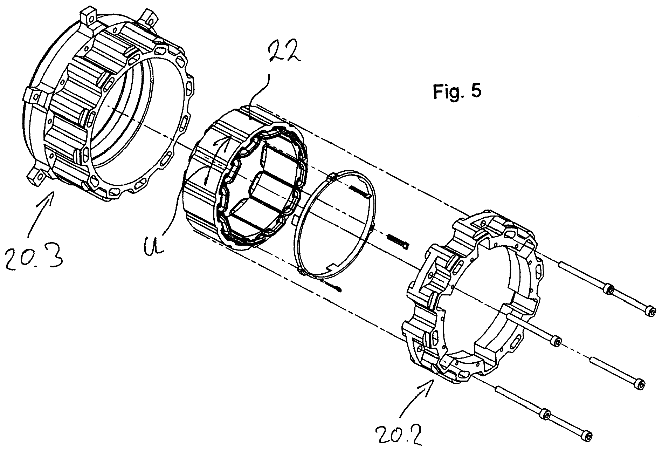

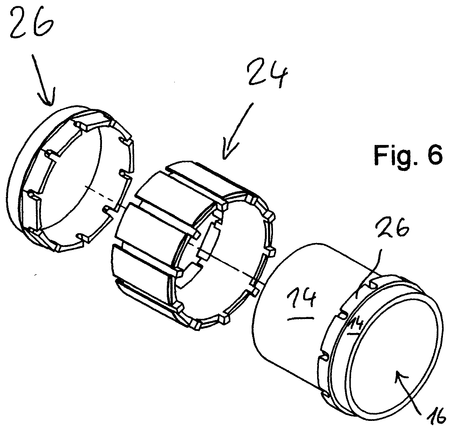

Wie in Fig. 6 gezeigt, umfasst der Rotor 16 insgesamt zehn in Umfangsrichtung nebeneinander angeordnete Permanentmagnete 24. Diese Permanentmagnete 24 werden über einen Lagerring 26 des Rotors 16 gehalten. Wie in Fig. 5 gezeigt, hat der Stator 22 insgesamt zwölf in Umfangsrichtung U nebeneinander angeordnete Spulen 28, die ortsfest zum Gehäuse 20 angeordnet sind. In Strömungsrichtung 30 vor bzw. in Fahrtrichtung hinter dem Rotor 16 ist ein den Strömungskanal 6 mitausbildender Modulabschnitt 34 angeordnet, der mehrere Leitschaufeln 32 aufweist. In dem Modulabschnitt 34 ist radial von den Leitschaufeln 32 beabstandet eine einen Motor-Controller aufweisende Motorelektronik 36 angeordnet.

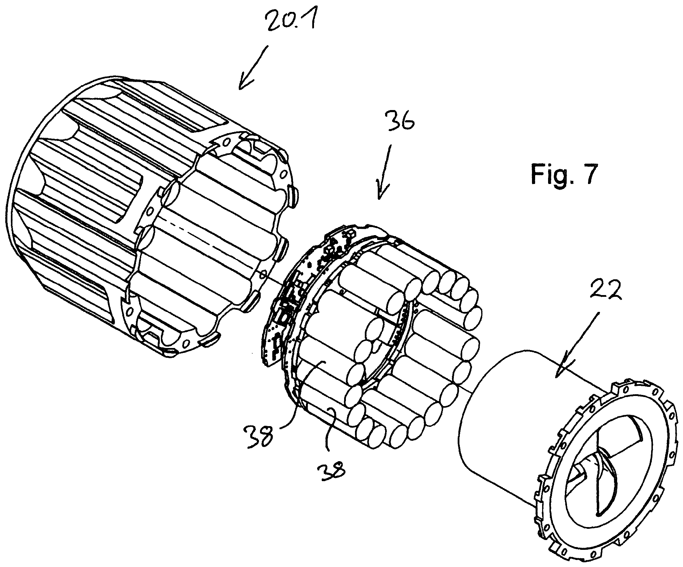

Die Motorelektronik 36 umfasst eine Mehrzahl von in Umfangsrichtung U nebeneinander angeordneten, länglichen und zylinderförmigen Kondensatoren 38, deren Längsachsen parallel zur Rotationsachse verlaufen (vergl. Fig. 7). Das Gehäuse 20, in dem die Motorelektronik 36 und der Stator 22 angeordnet sind, umfasst die Gehäuseteile 20.1, 20.2 und 20.3 (vergl. Fig. 4). Der Stator 22 ist ebenso wie die Motorelektronik 36 innerhalb des Gehäuses 20 vergossen.

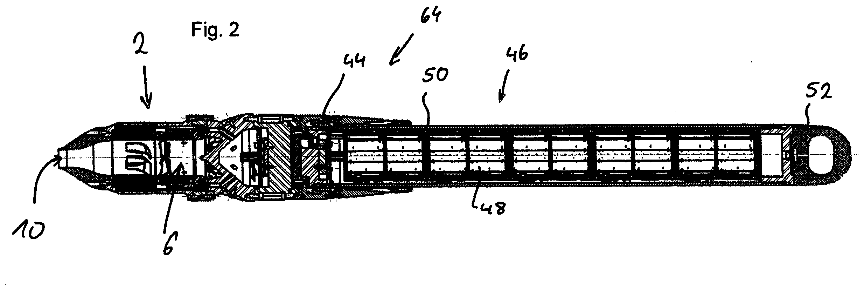

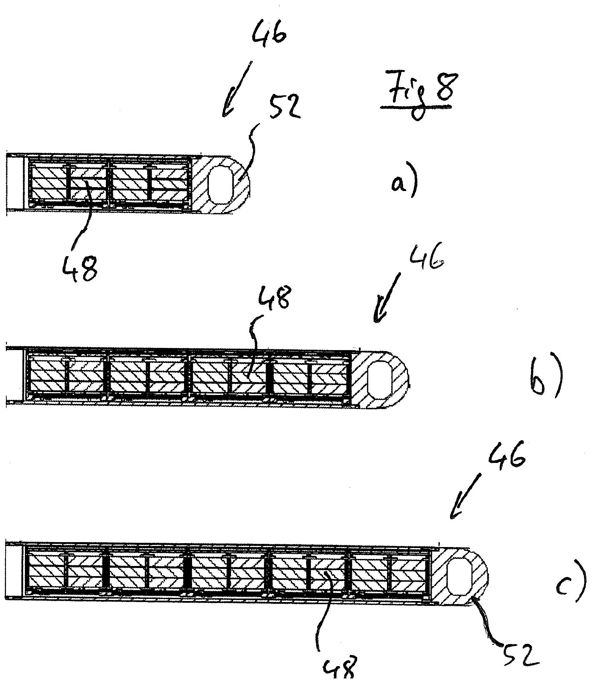

Das Gehäuse 20 hat in Strömungsrichtung hinten bzw. in Fahrtrichtung vorne einen sich aufweitenden Außenabschnitt 40, der die mehreren ringsegmentförmigen Einlassöffnungen 8 bzw. eine von Stegen unterbrochene, ringförmige Einlassöffnung 8 ausbildet (vergl. Fig. 2 und 3, die Längsschnitte desselben Unterwasserantriebs 64 bei unterschiedlichen Drehwinkeln zeigen). Strömungspfeile S veranschaulichen den Weg des Wassers von der Einlassöffnung aus der hinteren Auslassöffnung heraus. Zwischen den Einlassöffnungen 8 und nach vorne versetzt hat das Unterwassermotormodul 2 einen vorderen Anschlussbereich 44 für das Energiespeichermodul 46. Das Energiespeichermodul 46 umfasst acht Batteriepakete 48, die in Längsrichtung L hintereinander in einem Energiespeichermodulgehäuse 50 angeordnet sind, welches im Anschlussbereich 44 mit dem Unterwassermotormodul 2 verbunden ist. Alternative Energiespeichermodule 46 haben vier oder zehn Batteriepakete 48 (vergl. Fig. 8a bis 8c). Das Energiespeichermodul 46 hat unabhängig von der Zahl der Batteriepakete 48 einen Handgriff 52 im in Fahrtrichtung F vorderen Bereich.

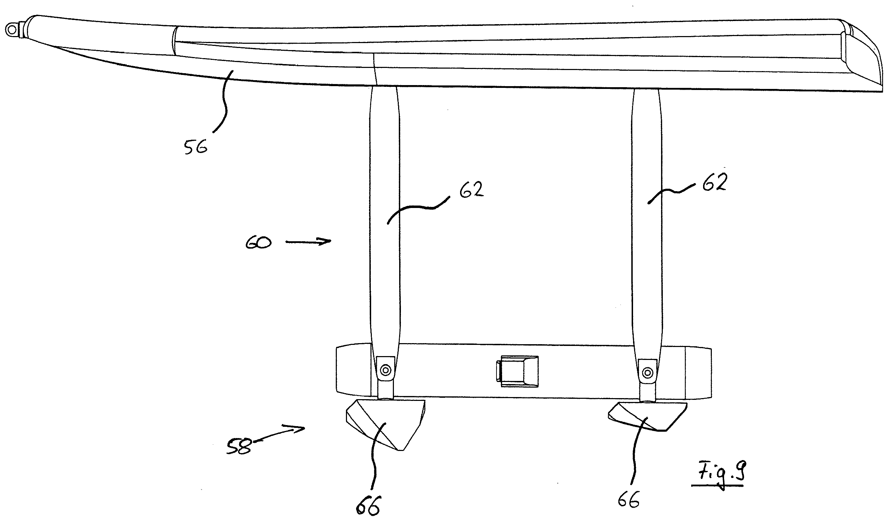

Das Wassersportgerät 3 gemäß Fig. 9 hat einen Unterwasserantrieb 64. Außerdem hat das Wassersportgerät 3 einen Schwimmkörper 56 in Form eines Schwimmbretts und eine Tragflächenvorrichtung 58 mit zwei Tragflächen 66. Die Tragflächenvorrichtung 58 ist mittels einer Haltevorrichtung 60 am Schwimmkörper 56 befestigt. Die Haltevorrichtung 60 umfasst zwei Lenker 62, durch die die Tragflächenvorrichtungen 58 mittelbar beweglich am Schwimmkörper 56 angeordnet sind. Durch die Haltevorrichtung 60 ist die Tragflächenvorrichtung 58 aus einer Ruhe- und/oder Startposition dicht am Schwimmkörper 56 in eine Betriebsstellung unterhalb des Schwimmkörpers 56 überführbar. Der Schwimmkörper 56 ist in der Betriebsstellung und während einer Vorwärtsbewegung des Wassersportgerätes 3 aufgrund eines durch die Tragflächen 66 bewirkten Auftriebs in eine von der Wasseroberfläche beabstandete Position überführbar. Das Unterwassermotormodul 2, welches in Fig. 9 lediglich schematisch dargestellt ist, ist als Teil der Tragflächenvorrichtung 58 ausgebildet.

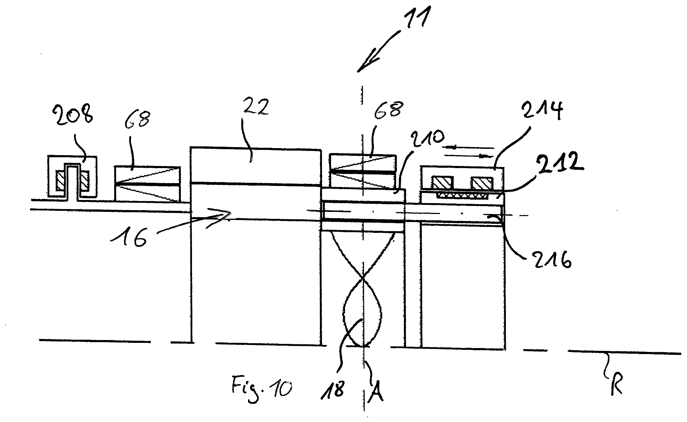

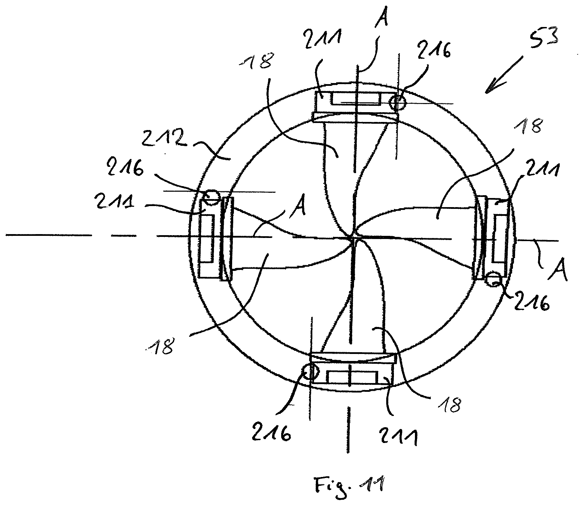

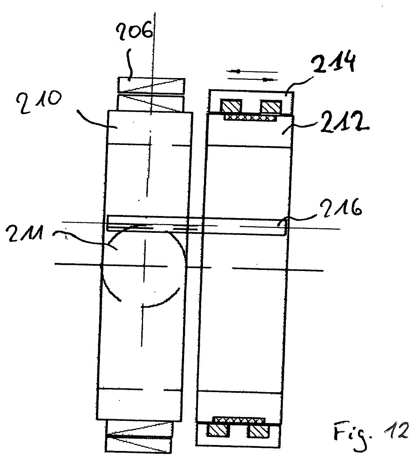

Fig. 10 bis 12 zeigen schematisch eine vorteilhafte Ausführungsform eines mit einem Impeller 53 versehen Unterwassermotormodul 2, bei dem Schaufeln 18 um eine Schaufelachse A - um vorzugsweise zumindest +/- 10°- verdrehbar und somit in ihrem Anstellwinkel verstellbar sind. Die einzelnen Schaufeln 18 sind hierbei nur mittelbar miteinander verbunden. Hierzu weist die das Unterwassermotormodul 2 einen als Innenläufer ausgebildeten Motor 11 mit einem Stator 22 und einem Rotor 16 auf. Auf seiner vom Strömungskanal weg gerichteten Außenseite ist der Rotor 16 durch zwei Radiallager 68, die vorliegend als Magnetlager ausgebildet sind, sowie ein Axiallager 208, das vorliegend ebenfalls als Magnetlager ausgebildet ist, gelagert. Der mehrteilige Rotor 16 weist einen Impellerring 210 auf, der drehbare Schaufelaufnahmen 211 aufweist. An den Schaufelaufnahmen 211 ist jeweils eine Schaufel 18 angeordnet. Die Vortriebsvorrichtung 50 weist einen koaxial entlang einer Drehachse R zu dem Rotor 16 bzw. dem Impellerring 210 angeordneten Verstellring 212 auf. Der Verstellring 212 ist ebenfalls hohl, bildet den Strömungskanal mit aus und ist auf seiner vom Strömungskanal weg gerichteten Außenseite gelagert. Der Abstand zwischen Verstellring 212 und Impellerring 210 in axialer Richtung (Drehachse R) ist hierbei veränderbar. Vorliegend wird dies durch ein aktiv elektromagnetisch bestätigbares Verstellmittel in einem magnetischen Lager 214 des Verstellrings 212 erreicht. Der Verstellring 212 steht über einzelne Verstellstifte 216 in Eingriff mit zylinderförmigen Außenabschnitten der Schaufelaufnahmen 211. Wenn der axiale Abstand zwischen Verstellring 212 und Impellerring 210 über das magnetischen Lager 214 verändert wird, wird diese translatorische Bewegung durch das Zusammenwirken der Verstellstifte 216 und der Schaufelaufnahmen 211 in eine Drehbewegung der Schaufeln 18 umgesetzt, über die die Schaufeln 18 verschwenkt werden können. Hierdurch kann der Anstellwinkel der Schaufeln 18 eingestellt und ebenfalls festgelegt werden.

## Patentansprüche

1. Unterwassermotormodul (2) für ein Wassersportgerät (3), welches wenigstens einen Strömungskanal (6) mit jeweils zumindest einer Einlass- (8) und einer Auslassöffnung (10) ausbildet und einen als Innenläufer ausgebildeten Motor (11) aufweist, der einen hohlen, mit seiner Innenseite (12) den Strömungskanal (6) mit ausbildenden und an seiner vom Strömungskanal (6) weggerichteten Außenseite (14) außerhalb des Strömungskanals (6) gelagerten Rotor (16), der Schaufeln (18) trägt, sowie einen äußeren in einem Gehäuse (20) angeordneten Stator (22) umfasst, **dadurch gekennzeichnet, dass** in Strömungsrichtung (30) hinter dem Rotor (16) ein wenigstens eine Leitschaufel (32) aufweisender und den Strömungskanal (6) mit ausbildender Modulabschnitt (34) angeordnet ist, in dem in Strömungsrichtung (30) betrachtet radial von der Leitschaufel (32) aus eine Motorelektronik (36) angeordnet ist.

2. Unterwassermotormodul nach Anspruch 1, **dadurch gekennzeichnet, dass** der Rotor (16) in Umfangsrichtung (U) nebeneinander angeordnete Permanentmagnete (24) aufweist, welche insbesondere über einen Lagerring (26) auf dem Rotor (16) gehalten sind.

3. Unterwassermotormodul nach Anspruch 1 oder 2, **dadurch gekennzeichnet, dass** der Stator (22) eine Mehrzahl von in Umfangsrichtung (U) nebeneinander angeordneten Spulen (28) aufweist.

4. Unterwassermotormodul nach einem der vorherigen Ansprüche, **dadurch gekennzeichnet, dass** die Motorelektronik einen Motor-Controller aufweist.

5. Unterwassermotormodul nach einem der vorherigen Ansprüche, **dadurch gekennzeichnet, dass** die Motorelektronik (36) eine Mehrzahl von in Umfangsrichtung (U) nebeneinander angeordneten, länglichen und vorzugsweise zylinderförmigen Kondensatoren (38) aufweist, insbesondere deren Längsachsen parallel zu einer Zentralachse (R) des Unterwassermotormoduls (2) verläuft.

6. Unterwassermotormodul nach einem der vorherigen Ansprüche, **dadurch gekennzeichnet, dass** die Motorelektronik (36) und der Stator (22) in dem vorzugsweise dreiteiligen Gehäuse (20) angeordnet sind.

7. Unterwassermotormodul nach Anspruch 6, **dadurch gekennzeichnet, dass** der Stator (22) in wenigstens einem der Teile des Gehäuses (20) vergossen ist.

8. Unterwassermotormodul nach einem der vorherigen Ansprüche, **dadurch gekennzeichnet, dass** das Gehäuse (20) in Strömungsrichtung (30) hinten einen sich aufweitenden Außenabschnitt (40) aufweist, der die zumindest eine ring- oder ringsegmentförmige Einlassöffnung (8) ausbildet.

9. Unterwassermotormodul nach einem der vorherigen Ansprüche, **gekennzeichnet durch** einen vorderen Anschlussbereich (44) für ein Energiespeichermodul (46) und/oder eine Steuereinheit.

10. Unterwasserantrieb (64) umfassend ein Unterwassermotormodul (2) nach einem der vorherigen Ansprüche sowie ein Energiespeichermodul (46).

11. Unterwasserantrieb nach Anspruch 10, **dadurch gekennzeichnet, dass** das Energiespeichermodul (46) eine Mehrzahl von Batteriepaketen (48) umfasst, die vorzugsweise in Längsrichtung (L) hintereinander in einem Energiespeichermodulgehäuse (50) angeordnet sind, welches lösbar mit dem Unterwassermotormodul (2) verbunden ist.

12. Unterwasserantrieb nach Anspruch 10 oder 11, **dadurch gekennzeichnet, dass** das Energiespeichermodul (46) einen Handgriff (52) aufweist.

13. Unterwasserantrieb nach einem der vorherigen Ansprüche, **dadurch gekennzeichnet, dass** die Steuereinheit zur Erzeugung von Steuersignalen für den Motor ausgebildet ist.

14. Unterwasserantrieb nach einem der vorherigen Ansprüche 10 bis 13, **dadurch gekennzeichnet, dass** zusätzlich zu dem Strömungskanal (6) ein Strömungskühlkanal durch das Energiespeichermodul (46) führt und insbesondere in den Strömungskanal (6) mündet.

15. Unterwasserantrieb nach einem der vorherigen Ansprüche 10 bis 13, **gekennzeichnet durch** wenigstens ein die Ausrichtung eines im Betrieb entstehenden Wasserstroms beeinflussendes Steuerelement, welches durch wenigstens ein ausrichtbares Teil des Unterwassermotormoduls und/oder ein Düsenelement ausgebildet wird.

16. Unterwasserantrieb nach einem der vorherigen Ansprüche, **dadurch gekennzeichnet, dass** der Rotor um eine jeweilige Schaufelachse (A) verdrehbare Schaufeln aufweist.

17. Unterwasserantrieb nach Anspruch 16, **dadurch gekennzeichnet, dass** der Rotor (16) mehrteilig mit einem als Impellerring 210 ausgebildeten Schaufelträger und einem relativ zum Schaufelträger entlang einer Rotationsachse (R) verschieblichen Verstellring (212) ausgebildet ist, welche zur Verschwenkung der Schaufeln mit jeweiligen Verschiebemitteln auf jeweilige Schaufelaufnahmen einwirkt.

18. Wassersportgerät (3), **gekennzeichnet durch** einen Unterwasserantrieb (64) nach einem der Ansprüche 10 bis 15.

19. Wassersportgerät nach Anspruch 18, **gekennzeichnet durch** einen Schwimmkörper (56), vorzugsweise in Form eines Schwimmbretts, und eine Tragflächenvorrichtung (58), die mittels einer Haltevorrichtung (60) am Schwimmkörper (56) befestigt ist,
wobei die an einem Lenker (62) der Haltevorrichtung (60) angeordnete Tragflächenvorrichtung (58) wenigstens eine, vorzugsweise zumindest zwei Tragflächen (66) aufweist und über die Haltevorrichtung (60) aus einer Ruhe- und/oder Startposition dicht am Schwimmkörper (56) in eine Betriebsstellung unterhalb des Schwimmkörpers (56) überführbar ist,
wobei der Schwimmkörper (56) in der Betriebsstellung und während einer Vorwärtsbewegung aufgrund eines durch die Tragflächenvorrichtung (58) bewirkten Auftriebs in eine von einer Wasseroberfläche beabstandete Position überführbar ist, wobei das Unterwassermotormodul (2) zumindest teilweise als Teil der Tragflächenvorrichtung (58) ausgebildet ist.

## Claims

1. Underwater motor module (2) for a water sports device (3), which forms at least one flow channel (6) each having at least one inlet opening (8) and an outlet opening (10) and has a motor (11) which is in the form of an internal rotor motor and comprises a hollow rotor (16), which concomitantly forms the flow channel (6) by way of its inner side (12), which on its outer side (14) directed away from the flow channel (6) is mounted outside the flow channel (6), and which bears blades (18), and also comprises an external stator (22) arranged in a housing (20), **characterized in that** a module portion (34) which has at least one guide blade (32) and concomitantly forms the flow channel (6) is arranged downstream of the rotor (16) in the flow direction (30), in which module portion, radially from the guide blade (32) as viewed in the flow direction (30), are arranged motor electronics (36).

2. Underwater motor module according to Claim 1, **characterized in that** the rotor (16) has permanent magnets (24) which are arranged next to one another in the circumferential direction (U) and which are retained on the rotor (16) in particular via a bearing ring (26).

3. Underwater motor module according to Claim 1 or 2, **characterized in that** the stator (22) has a plurality of coils (28) arranged next to one another in the circumferential direction (U).

4. Underwater motor module according to one of the preceding claims, **characterized in that** the motor electronics have a motor controller.

5. Underwater motor module according to one of the preceding claims, **characterized in that** the motor electronics (36) have a plurality of elongate and preferably cylindrical capacitors (38) arranged next to one another in the circumferential direction (U), in particular the longitudinal axes of which run parallel to a central axis (R) of the underwater motor module (2).

6. Underwater motor module according to one of the preceding claims, **characterized in that** the motor electronics (36) and the stator (22) are arranged in the preferably three-part housing (20).

7. Underwater motor module according to Claim 6, **characterized in that** the stator (22) is potted in at least one of the parts of the housing (20).

8. Underwater motor module according to one of the preceding claims, **characterized in that**, at the rear in the flow direction (30), the housing (20) has a widening outer portion (40), which forms the at least one inlet opening (8), which is annular or in the form of a segment of a ring.

9. Underwater motor module according to one of the preceding claims, **characterized by** a front connection region (44) for an energy storage module (46) and/or a control unit.

10. Underwater drive (64) comprising an underwater motor module (2) according to one of the preceding claims and also an energy storage module (46).

11. Underwater drive according to Claim 10, **characterized in that** the energy storage module (46) comprises a plurality of battery packs (48) which are preferably arranged one behind another in the longitudinal direction (L) in an energy storage module housing (50), which is detachably connected to the underwater motor module (2).

12. Underwater drive according to Claim 10 or 11, **characterized in that** the energy storage module (46) has a handle (52).

13. Underwater drive according to one of the preceding claims, **characterized in that** the control unit is designed to generate control signals for the motor.

14. Underwater drive according to one of the preceding Claims 10 to 13, **characterized in that**, in addition to the flow channel (6), a flow cooling channel leads through the energy storage module (46) and in particular opens into the flow channel (6).

15. Underwater drive according to one of the preceding Claims 10 to 13, **characterized by** at least one control element, which influences the alignment of a flow of water produced during operation and which is formed by at least one alignable part of the underwater motor module and/or a nozzle element.

16. Underwater drive according to one of the preceding claims, **characterized in that** the rotor has blades that can be rotated about a respective blade axis (A).

17. Underwater drive according to Claim 16, **characterized in that** the rotor (16) has a multi-part form with a blade carrier in the form of an impeller ring 210 and an adjusting ring (212) that can be displaced relative to the blade carrier along an axis of rotation (R) and that acts on respective blade receptacles by way of respective displacing means for the purpose of pivoting the blades.

18. Water sports device (3), **characterized by** an underwater drive (64) according to one of Claims 10 to 15.

19. Water sports device according to Claim 18, **characterized by** a floating body (56), preferably in the form of a floating board, and a hydrofoil device (58) which is fastened to the floating body (56) by means of a retaining device (60),
wherein the hydrofoil device (58) arranged on a link (62) of the retaining device (60) has at least one, preferably at least two, hydrofoils (66) and via the retaining device (60) can be transferred from a rest and/or starting position close to the floating body (56) into an operating position below the floating body (56),
wherein, in the operating position and during a forward movement, on account of the buoyancy brought about by the hydrofoil device (58) the floating body (56) can be transferred into a position spaced apart from a water surface, wherein the underwater motor module (2) is formed at least partially as part of the hydrofoil device (58).

## Revendications

1. Module de moteur immergé (2) pour un appareil de sport nautique (3), qui réalise au moins un canal d'écoulement (6) avec au moins une ouverture d'entrée (8) et une ouverture de sortie (10) et qui présente un moteur (11) réalisé sous forme de rotor interne, qui comprend un rotor (16) creux, réalisant avec son côté intérieur (12) le canal d'écoulement (6) et monté à l'extérieur du canal d'écoulement (6) sur son côté extérieur (14) orienté à l'opposé du canal d'écoulement (6), qui porte des aubes (18), ainsi qu'un stator (22) extérieur agencé dans un boîtier (20), **caractérisé en ce qu'**une section de module (34) présentant au moins une aube directrice (32) et réalisant le canal d'écoulement (6) est agencée derrière le rotor (16) dans la direction d'écoulement (30), section dans laquelle une électronique de moteur (36) est agencée radialement à partir de l'aube directrice (32), vu dans la direction d'écoulement (30).

2. Module de moteur immergé selon la revendication 1, **caractérisé en ce que** le rotor (16) présente des aimants permanents (24) agencés les uns à côté des autres dans la direction circonférentielle (U), qui sont notamment maintenus sur le rotor (16) par l'intermédiaire d'une bague de palier (26).

3. Module de moteur immergé selon la revendication 1 ou 2, **caractérisé en ce que** le stator (22) présente une pluralité de bobines (28) agencées les unes à côté des autres dans la direction circonférentielle (U).

4. Module de moteur immergé selon l'une quelconque des revendications précédentes, **caractérisé en ce que** l'électronique de moteur présente un contrôleur de moteur.

5. Module de moteur immergé selon l'une quelconque des revendications précédentes, **caractérisé en ce que** l'électronique de moteur (36) présente une pluralité de condensateurs (38) allongés et de préférence cylindriques, agencés les uns à côté des autres dans la direction circonférentielle (U), notamment dont les axes longitudinaux sont parallèles à un axe central (R) du module de moteur immergé (2).

6. Module de moteur immergé selon l'une quelconque des revendications précédentes, **caractérisé en ce que** l'électronique de moteur (36) et le stator (22) sont agencés dans le boîtier (20) de préférence en trois parties.

7. Module de moteur immergé selon la revendication 6, **caractérisé en ce que** le stator (22) est surmoulé dans au moins une des parties du boîtier (20).

8. Module de moteur immergé selon l'une quelconque des revendications précédentes, **caractérisé en ce que** le boîtier (20) présente, à l'arrière dans la direction d'écoulement (30), une section extérieure (40) s'évasant, qui forme l'au moins une ouverture d'entrée (8) en forme d'anneau ou de segment d'anneau.

9. Module de moteur immergé selon l'une quelconque des revendications précédentes, **caractérisé par** une zone de raccordement avant (44) pour un module de stockage d'énergie (46) et/ou une unité de commande.

10. Entraînement immergé (64) comprenant un module de moteur immergé (2) selon l'une quelconque des revendications précédentes ainsi qu'un module de stockage d'énergie (46).

11. Entraînement immergé selon la revendication 10, **caractérisé en ce que** le module de stockage d'énergie (46) comprend une pluralité de paquets de batteries (48), qui sont agencés de préférence les uns derrière les autres dans la direction longitudinale (L) dans un boîtier de module de stockage d'énergie (50), qui est relié de manière amovible au module de moteur immergé (2).

12. Entraînement immergé selon la revendication 10 ou 11, **caractérisé en ce que** le module de stockage d'énergie (46) présente une poignée (52).

13. Entraînement immergé selon l'une quelconque des revendications précédentes, **caractérisé en ce que** l'unité de commande est réalisée pour générer des signaux de commande pour le moteur.

14. Entraînement immergé selon l'une quelconque des revendications 10 à 13 précédentes, **caractérisé en ce qu'**en plus du canal d'écoulement (6), un canal de refroidissement d'écoulement traverse le module de stockage d'énergie (46) et débouche notamment dans le canal d'écoulement (6).

15. Entraînement immergé selon l'une quelconque des revendications 10 à 13 précédentes, **caractérisé par** au moins un élément de commande influençant l'orientation d'un courant d'eau généré en fonctionnement, qui est réalisé par au moins une partie orientable du module de moteur immergé et/ou un élément de buse.

16. Entraînement immergé selon l'une quelconque des revendications précédentes, **caractérisé en ce que** le rotor présente des aubes pouvant tourner autour d'un axe d'aube respectif (A).

17. Entraînement immergé selon la revendication 16, **caractérisé en ce que** le rotor (16) est réalisé en plusieurs parties avec un support d'aubes réalisé sous forme d'anneau de roue 210 et un anneau de réglage (212) déplaçable par rapport au support d'aubes le long d'un axe de rotation (R), qui agit sur des logements d'aubes respectifs avec des moyens de déplacement respectifs pour faire pivoter les aubes.

18. Appareil de sport nautique (3), **caractérisé par** un entraînement immergé (64) selon l'une quelconque des revendications 10 à 15.

19. Appareil de sport nautique selon la revendication 18, **caractérisé par** un corps flottant (56), de préférence sous la forme d'une planche de natation, et un dispositif à surface portante (58) qui est fixé au corps flottant (56) au moyen d'un dispositif de maintien (60),
le dispositif à surface portante (58) agencé sur un bras (62) du dispositif de maintien (60) présentant au moins une, de préférence au moins deux surfaces portantes (66) et pouvant être transféré par l'intermédiaire du dispositif de maintien (60) d'une position de repos et/ou de démarrage proche du corps flottant (56) dans une position de fonctionnement en dessous du corps flottant (56),
le corps flottant (56) pouvant être transféré dans la position de fonctionnement et pendant un mouvement vers l'avant dans une position éloignée d'une surface d'eau en raison d'une poussée provoquée par le dispositif à surface portante (58), le module de moteur immergé (2) étant réalisé au moins partiellement en tant que partie du dispositif à surface portante (58).
